# EUROPÄISCHE PATENTSCHRIFT

(11) **EP 1 834 519 B1**
(45) Veröffentlichungstag und Bekanntmachung des Hinweises auf die Patenterteilung: **29.06.2011**
(21) Anmeldenummer: 06005319.6
(22) Anmeldetag: 15.03.2006
(51) Int. Cl.: A01G 13/02

(54) **Baumschürze**
Tree apron
Tablier pour arbre

(43) Veröffentlichungstag der Anmeldung: 19.09.2007
(73) Patentinhaber: Walter, Hans, 74572 Blaufelden (DE)
(72) Erfinder: Walter, Hans, 74572 Blaufelden (DE)
(74) Vertreter: von Hellfeld, Axel

(56) Entgegenhaltungen:
- BE-A2- 904 592
- DE-A1- 3 602 950
- DE-C- 364 933

## Beschreibung

Die Erfindung betrifft eine Baumstammummantelung.

Während bei jungen Bäumen noch alle Äste vorhanden sind, setzt bei älteren Bäumen nach Beginn der natürlichen Astreinigung eine Differenzierung in drei Astbereiche ein, in den Grünastbereich, den Trockenastbereich und in ein äußerlich astfreies Stammstück. Obwohl naturbedingt an jedem Stamm mehr oder weniger viele Äste vorhanden sind, gelten diese als Holzfehler.
Holzstämme von Bäumen wie Eichen, Buchen, Eschen, Ahorn, Elsbeere, Weißtanne etc., die im Verband mit anderen Bäumen aufwachsen und sich gegenseitig im Streben nach Sonnenlicht in die Höhe treiben, sind in der Regel astfrei und deshalb qualitativ hochwertige und somit sehr wertvolle Hölzer. Diese hochwertigen astfreien Stämme können zum Beispiel zu Furnier verarbeitet oder als Massivholz besonderer Qualität in der Möbel- oder Bauindustrie Verwendung finden.

Durch Windwurf, Schneebruch, Schädlingsbefall oder Fällung der umstehenden Bäume werden diese Wertholzbäume - es handelt sich meist um langsamer wachsende Laubbäume - freigestellt. Dies führt dazu, dass diese Bäume zum Beispiel sogenannte Wasserreiser ausbilden und somit nicht mehr astfrei sind. Hierdurch ist der Wert der einzeln stehenden Bäume erheblich reduziert und sie können nicht mehr als Wertholz verkauft und verarbeitet werden. Speziell bei der Eiche kommt hinzu, dass durch eine fehlende Beschattung durch umstehende Bäume dem Stamm kein wertvolles dunkles Kernholz zuwächst, sondern außen nur hauptsächlich wertloses Holz (Splintholz).
Bei Neuanpflanzungen in der Nähe von Altbäumen tritt oft das Problem auf, dass Jungpflanzen nicht gerade nach oben wachsen können, da sie den Wasserreisern der Altbäume ausweichen müssen, und somit verkrümmen oder sogar verkümmern.

Der Stand der Technik kennt Vorrichtungen zum Schutz von Bäumen vor Insektenbefall (z.B. EP 1 566 095A1, DE 43 21 511 C2), vor Wildverbiss und Frostschäden (z.B. DE 203 19 331 U1), vor mechanischer Beschädigung wie Straßenbauarbeiten (z.B. DE 20 2004 019 426 U1) und zum Schutz von Straßenbäumen vor Umwelteinflüssen des Straßenverkehrs (z.B. DE 35 40 828 A1), jedoch sind keine Vorrichtungen zum Verhindern von Astwuchs oder der Bildung von Splintholz bekannt.

Die DE 360 2950 A1 beschreibt einen Baumwickel zur Ummantelung von Stämmen und Ästen, um Austriebe an Stämmen freistehender Bäume zu verhindern. Es findet sich dort keine Ummantelung mit Einrichtungen zum Aufhängen derselben an Vorsprügen des Baumes.

Um sowohl den Wuchs von Ästen und von nutzlosem Splintholz an Wertholzstämmen, als auch den Wuchs von Ästen an Altbäumen, der zu einer Verkümmerung oder Verkrümmung benachbarter Jungpflanzen bei Neuanpflanzungen führen kann, zu vermeiden, muss den Stämmen der Bäume Sonnenlicht entzogen und Schatten simuliert werden.

Bei diesem Problem will die Erfindung Abhilfe schaffen.

Hierzu stellt die Erfindung eine Ummantelung gemäß Patentanspruch 1 bereit. Vorteilhafte Ausgestaltungen der Ummantelung sind in den abhängigen Ansprüchen beschrieben.

Die Ummantelung ist derart ausgestaltet, dass der Stamm ohne Einschränkung und Einengung weiter wachsen kann. Gemäß einer bevorzugten Ausgestaltung kann dabei die Ummantelung aus dehnbarem mitwachsendem oder aus lose hängendem Material bestehen.

Bevorzugt wird die Ummantelung derart am Baumstamm angebracht, dass zwischen der Ummantelung und dem Baumstamm kein Klebstoff verwendet wird. Die Ummantelung kann zum Beispiel aus einer den Baumstamm wendelförmig umgebenden Folie, insbesondere Stretchfolie oder einem anderen dehnbaren Material, gebildet werden. Gemäß einer bevorzugten Ausgestaltung kann die Ummantelung an Ästen oder Astgabelungen des Baumes befestigt sein. Dabei kann die Ummantelung bevorzugt aus einem Gewebe, einer Folie oder einem anderen Material bestehen.
Bevorzugt ist die Ummantelung so ausgestaltet, dass sie aus dauerhaft reißfestem, wind-, wasser-, UV- und froststabilem Material besteht. Diese Eigenschaften sollen zumindest so lange erfüllt sein, bis der Baum gefällt oder durch Neuanpflanzungen wieder natürlich beschattet wird.
Eine andere bevorzugte Ausgestaltung der Erfindung sieht vor, dass die Ummantelung zumindest an der äußeren Oberfläche so gestaltet ist, dass die Absorption von Strahlung, insbesondere IR-Strahlung reduziert wird, um das Überhitzen des Baumes zu verhindern.
Gemäß einer bevorzugten Ausgestaltung soll die Ummantelung eine große Fläche des Baumstammes überdecken. Sie ist dabei bevorzugt so ausgestaltet, dass ihre äußere Umfangsfläche zumindest teilweise baumartig gestaltet ist oder als Werbeträger genutzt werden kann.
Bevorzugt kann die Ummantelung den Baum vor Insektenbefall (wie zum Beispiel der Bildung von Gespinstnestern der Eichenprozessionsspinner am Baumstamm) schützen, oder zumindest Insektenwanderungen (wie zum Beispiel die Wanderung der Eichenprozessionsspinner) hemmen oder ganz unterbinden. Gemäß einer bevorzugten Ausgestaltung kann hierzu ein Schaumstoffpolster im oberen Bereich der lose hängenden Ummantelung eingearbeitet oder eingebaut werden. Dieses Schaumstoffpolster schließt und passt sich bevorzugt dicht an die Borke des Baumes an und behindert oder verhindert die Raupenwanderung zwischen Borke und Ummantelung, sowohl in aufsteigender, als auch in absteigender Richtung.

Nachfolgend werden Ausführungsbeispiele der Erfindung anhand der Zeichnung näher beschrieben. Es zeigt:
- Figur 1: schematisch eine Baumstammummantelung zur Verhinderung von Astwachstum oder der Bildung von Splintholz und
- Figur 2: eine erfindungsgemäße Ummantelung zur Verhinderung von Astwachstum oder der Bildung von Splintholz.

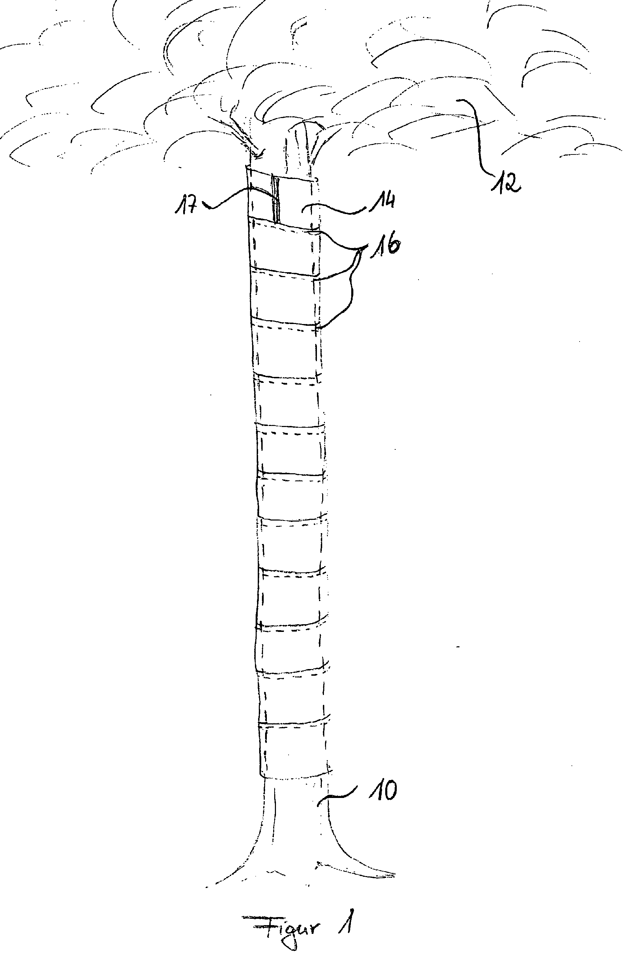

Figur 1 zeigt schematisch einen Baum mit einem Baumstamm 10 und einer Baumkrone 12. Der Baumstamm 10 ist mit einer lichtundurchlässigen Folie 14, insbesondere einer Stretchfolie, wendelförmig umhüllt. Die Folie 14 deckt dabei die Abmessungen des Baumstammes 10 im wesentlichen ab, ohne das Wachstum des Baumes einzuschränken, was z.B. durch die Dehnbarkeit der Folie 14 gewährleistet bleibt. Dabei kann die äußere Oberfläche der Folie 14 zumindest teilweise baumartig gestaltet sein (nicht gezeigt). Bei der wendelförmigen Ummantelung des Baumstammes 10 wird kein Klebstoff zwischen der Folie 14 und dem Baumstamm 10 verwendet.
Die Folie 14 ist lückenlos um den Baumstamm 10 angebracht, so dass sie sich bei jeder wendelförmigen Umwicklung des Baumstammes 10 in einem Bereich 16 überdeckt. Dabei kann die Folie 14 aus einem oder mehreren Streifen bestehen, die fortlaufend abschließend miteinander, bei der wendelförmigen Ummantelung des Baumstammes 10, verbunden werden, ohne die Eigenschaften der Lichtundurchlässigkeit, Dehnbarkeit, Reißfestigkeit, Wind- und Wasserfestigkeit zu gefährden.
Des Weiteren kann der Baumstamm 10 ein oder mehrmals mit der Folie 14 wendelförmig umhüllt werden. Das Ende 17 der Folie 14 wird ein oder mehrmals um dasselbe Baumstammsegment geführt, um es mit der sich darunter befindenden Folie z.B. mit Hilfe eines Klettsystems verbinden zu können.

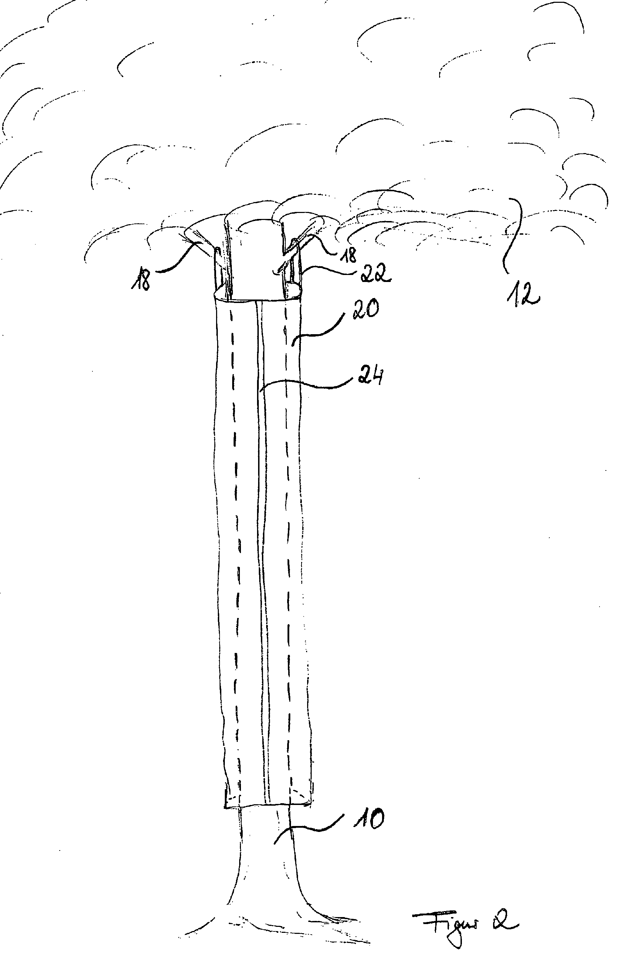

Figur 2 zeigt eine abgewandelte Ausführungsform einer Baumummantelung, die als hängende Umhüllung 20 an Vorsprüngen des Baumes, wie insbesondere an Ästen 18 mit Hilfe von Einrichtungen zum Aufhängen 22, befestigt ist. Die Kanten 24 der Ummantelung werden in dem Bereich, in dem sie aufeinandertreffen, überlappend verbunden. Dies kann z.B. mit Hilfe eines Klettsystems oder Klebemittels geschehen.
Die Ummantelung 20 deckt mit ihren Abmessungen den Baumstamm 10 im wesentlichen ab, wobei sich ihre Abmessungen dem Wachstum des Baumes anpassen.
Ferner besteht die Ummantelung 20 aus einem lichtundurchlässigen, dehnbaren, dauerhaft reißfestem, wind- und wasserstabilen und insbesondere die Absorption von IR-Strahlung reduzierendem Material.
Des Weiteren kann auch bei dieser Ausführungsform die äußere Oberfläche der Ummantelung 20 zumindest teilweise baumartig gestaltet sein (nicht gezeigt) oder als Werbeträger (nicht gezeigt) genutzt werden.

## Patentansprüche

1. Lichtundurchlässige Ummantelung (14; 20) für einen Baumstamm (10) zum Verhindern von Astwachstum oder der Bildung von Splintholz, mit Abmessungen, die sich einem Wachstum des Baumstammes (10) anpassen und mit denen die Ummantelung (14; 20) den Baumstamm (10) insgesamt im Wesentlichen abdeckt, **dadurch gekennzeichnet, dass** die Ummantelung (14; 20) Einrichtungen (22) aufweist zum Aufhängen derselben an Vorsprüngen des Baumes.

2. Ummantelung (14; 20) nach Anspruch 1 ohne Verwendung eines Klebestoffes zwischen Ummantelung (14; 20) und Baustamm (10).

3. Ummantelung (14; 20) nach einem der vorhergehenden Ansprüche, **dadurch gekennzeichnet, dass** sie dehnbar ist.

4. Ummantelung (14; 20) nach einem der vorhergehenden Ansprüche, **dadurch gekennzeichnet, dass** sie von einer wendelförmig den Baumstamm (10) umgebenden Folie, insbesondere Stretchfolie, gebildet ist.

5. Ummantelung (14; 20) nach einem der vorstehenden Ansprüche, mit Einrichtungen (22) zum Aufhängen der Ummantelung an Ästen oder Astgabelungen des Baumes.

6. Ummantelung (14; 20) nach einem der vorhergehenden Ansprüche, **dadurch gekennzeichnet, dass** sie aus dauerhaft reißfestem, wind-, wasser- und froststabilem Material besteht.

7. Ummantelung (14; 20) nach einem der vorhergehenden Ansprüche, **dadurch gekennzeichnet, dass** sie zumindest an der äußeren Oberfläche so gestaltet ist, dass die Absorption von Strahlung, insbesondere IR-Strahlung reduziert ist.

8. Ummantelung (14; 20) nach einem der vorhergehenden Ansprüche, **dadurch gekennzeichnet, dass** ihre äußere Umfangsfläche zumindest teilweise baumartig gestaltet ist.

9. Verwendung einer lichtundurchlässigen Ummantelung (14; 20) zum Ummanteln eines Baumstammes (10) zum Verhindern von Astwachstum oder der Bildung von Splintholz mit Einrichtungen (22) zum Aufhängen derselben an Vorsprüngen des Baumes.

## Claims

1. An opaque jacket (14; 20) for a tree trunk (10) for preventing the growth of branches or the formation of sapwood, with dimensions which adapt themselves to the growth of the tree trunk (10) and by means of which the jacket (14; 20) essentially covers the tree trunk (10) in its entirety,
**characterised in that** the jacket (14; 20) comprises means (22) for suspending it on protrusions of the tree.

2. The jacket (14; 20) according to Claim 1 without the use of an adhesive between the jacket (14; 20) and the tree trunk (10).

3. The jacket (14; 20) according to one of the previous claims,
**characterised in that** it is expandable.

4. The jacket (14; 20) according to one of the previous claims,
**characterised in that** it is formed by a foil, in particular, a stretch foil which helically surrounds the tree trunk (10)

5. The jacket (14; 20) according to one of the previous claims, comprising means (22) for suspending the jacket on branches or branch forks of the tree.

6. The jacket (14; 20) according to one of the previous claims,
**characterised in that** it consists of a permanently tear-resistant, wind-, water- and frost- stable material.

7. The jacket (14; 20) according to one of the previous claims,
**characterised in that** it is designed, at least on the outer surface, in such a manner that the absorption of radiation, in particular of IR radiation, is reduced.

8. The jacket (14; 20) according to one of the previous claims,
**characterised in that** its outer circumferential surface is designed at least partially in a tree-like fashion.

9. Use of an opaque jacket (14; 20) for surrounding a tree trunk (10) for preventing the growth of branches or the formation of sapwood, comprising means (22) for suspending it on protrusions of the tree.

## Revendications

1. Gaine imperméable à la lumière (14 ; 20) pour un tronc d'arbre (10), destinée à empêcher la croissance de branches ou la formation de bois d'aubier, et réalisée dans des dimensions qui s'adaptent à la croissance du tronc d'arbre (10) et permettent à la gaine (14 ; 20) de recouvrir pour l'essentiel dans l'ensemble le tronc d'arbre (10), **caractérisée en ce que** la dite gaine (14 ; 20) présente des aménagements (22) permettant sa suspension aux saillies de l'arbre.

2. Gaine (14 ; 20) selon la revendication 1 sans utilisation de colle entre la gaine (14 ; 20) et le tronc d'arbre (10).

3. Gaine (14 ; 20) selon l'une des revendications précédentes, **caractérisée en ce qu'**elle est extensible.

4. Gaine (14 ; 20) selon l'une des revendications précédentes, **caractérisée en ce qu'**elle est formée par un film, plus particulièrement par un film étirable, enroulé en hélice autour du tronc d'arbre (10).

5. Gaine (14 ; 20) selon l'une des revendications précédentes, munie d'aménagements (22) permettant de suspendre la gaine à des branches ou à des fourches de branche d'arbre.

6. Gaine (14 ; 20) selon l'une des revendications précédentes, **caractérisée en ce qu'**elle est composée d'un matériau durablement résistant à la déchirure et stable au vent, à l'eau et au gel.

7. Gaine (14 ; 20) selon l'une des revendications précédentes, **caractérisée en ce qu'**elle est, pour le moins à sa surface extérieure, conçue de manière à réduire l'absorption du rayonnement, plus particulièrement du rayonnement IR.

8. Gaine (14 ; 20) selon l'une des revendications précédentes, **caractérisée en ce que** sa surface circonférentielle extérieure est conçue pour le moins en partie comme celle d'un arbre.

9. Utilisation d'une gaine (14 ; 20) imperméable à la lumière, destinée à envelopper un tronc d'arbre (10) pour empêcher la croissance de branches ou la formation de bois d'aubier et munie de dispositifs (22) pour suspendre la gaine aux saillies d'un arbre.
